# EUROPEAN PATENT APPLICATION

(11) **EP 2 485 216 A1**
(43) Date of publication of application: **08.08.2012**
(21) Application number: 10820094.0
(22) Date of filing: 17.09.2010
(51) Int. Cl.: G11B 7/0045, G11B 7/005, G11B 7/007, G11B 7/09, G11B 7/24

(54) **RECORDING DEVICE, RECORDING METHOD, AND OPTICAL RECORDING MEDIUM**

(30) Priority: 01.10.2009 JP 2009229504
(71) Applicant: Sony Corporation, Tokyo 108-0075 (JP)
(72) Inventor: MIYAMOTO, Hirotaka, Tokyo 108-0075 (JP); SAKAMOTO, Tetsuhiro, Tokyo 108-0075 (JP); YAMATSU, Hisayuki, Tokyo 108-0075 (JP); UCHIYAMA, Hiroshi, Tokyo 108-0075 (JP)
(74) Representative: Haines, Miles John L.S.
(86) International application number: PCT/JP2010/005693
(87) International publication number: WO 2011/039968

(57) **Abstract**

[Object] To enable stable void recording to be performed with lower power than in a case where a conventional void recording method that records hole marks (voids) in a bulk layer is adopted.

[Solving Means] First laser light is irradiated onto an optical recording medium in which a plurality of resin layers are formed while the first laser light is focused on a boundary surface of the resin layers, to thus record hole marks onto the boundary surface. Since a recording sensitivity of the hole marks is enhanced at the boundary surface of the resin layers, by recording hole marks onto the boundary surface as described above, laser power requisite for recording can be suppressed as compared to the conventional art. As a result, it becomes unnecessary to use a special laser such as a short-pulse laser, and even if a CW laser (CW: Continuous Wave) is used, a recording speed does not need to be sacrificed. By compensating weak points of the conventional void recording method, realizability of a large-capacity recording medium as a bulk-type recording medium can be additionally enhanced.

## Description

### Technical Field

The present invention relates to a recording apparatus that records signals onto an optical recording medium onto/from which signals are recorded/reproduced by light irradiation, a method therefore, and an optical recording medium.

Patent Document 1: Japanese Patent Application Laid-open No. 2008-135144
Patent Document 2: Japanese Patent Application Laid-open No. 2008-176902

### Background Art

As optical recording media onto/from which signals are recorded/reproduced by light irradiation, so-called optical discs such as a CD (Compact Disc), a DVD (Digital Versatile Disc), and a BD (Blu-ray Disc: registered trademark) are in wide use.

Regarding next-generation optical recording media following the optical recording media such as a CD, a DVD, and a BD that have currently prevailed, the applicant has proposed a so-called bulk-recording-type optical recording medium as disclosed in Patent Documents 1 and 2 above.

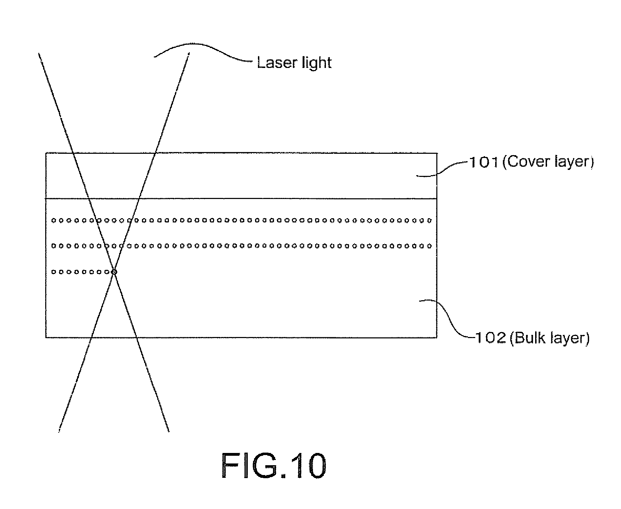

Here, bulk recording is a technique for realizing a large recording capacity by performing, onto an optical recording medium including at least a cover layer 101 and a bulk layer (recording layer) 102 as shown in Fig. 10, for example, multilayer recording within the bulk layer 102 by irradiating laser light while successively changing a focal position.

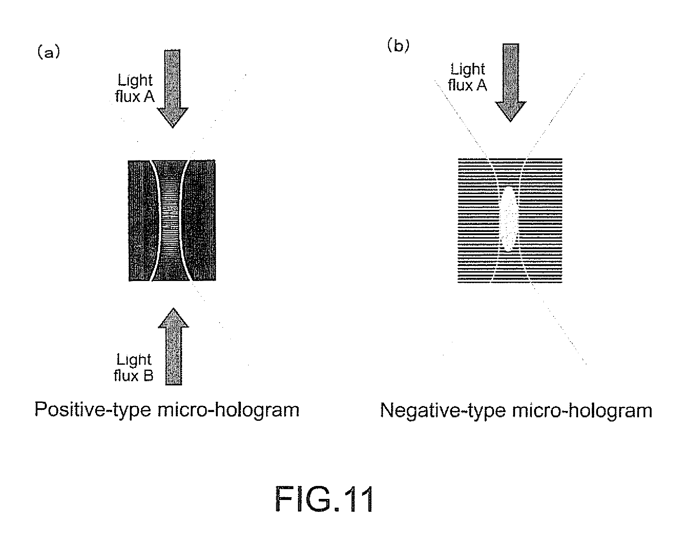

Regarding the bulk recording as described above, Patent Document 1 above discloses a recording technique called micro-hologram,
The micro-hologram technique is roughly classified into a positive-type micro-hologram technique and a negative-type micro-hologram technique as shown in Figs. 11.
In the micro-hologram technique, a so-called hologram recording material is used as a recording material of the bulk layer 102. As the hologram recording material, a photopolymerization-type photopolymer is widely known, for example.

The positive-type micro-hologram technique is a technique for forming recording marks by collecting light of two opposing light fluxes (light flux A, light flux B) at one position and forming minute interference fringes (holograms) as shown in Fig. 11(a).

Further, the negative-type micro-hologram technique shown in Fig. 11(b) is a technique for forming recording marks by deleting, based on an opposite idea from the positive-type micro-hologram technique, interference fringes that have been formed previously by irradiating laser light and using the deleted portions as the recording marks.

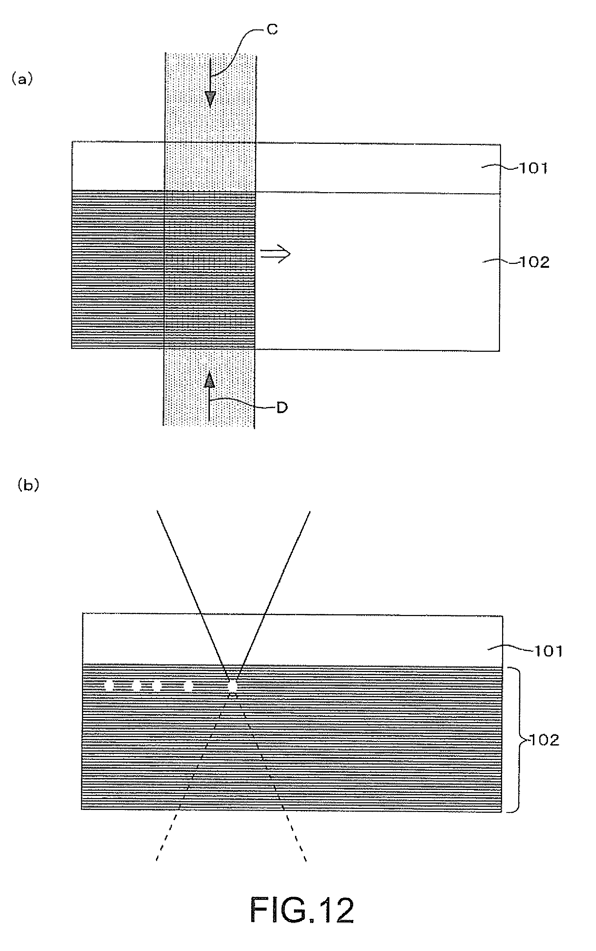

Figs. 12 are diagrams for explaining the negative-type micro-hologram technique.
In the negative-type micro-hologram technique, initialization processing for forming interference fringes on the bulk layer 102 in advance as shown in Fig. 12(a) is carried out before performing a recording operation. Specifically, as shown in the figure, light fluxes C and D as parallel light are irradiated oppositely so that interference fringes are formed on the entire bulk layer 102.
After forming the interference fringes in advance by the initialization processing as described above, information recording is performed by forming deletion marks as shown in Fig. 12(b). Specifically, by irradiating laser light in accordance with recording information while a focal position is set at an arbitrary layer position, information recording that uses deletion marks is performed.

However, there have been the following problems in the positive- and negative-type micro-hologram techniques.
First, for realizing the positive-type micro-holograms, there is a problem that extremely-high accuracy is required in control of a laser light irradiation position. In other words, although recording marks (holograms) are formed by collecting the opposing light fluxes A and B at one position in the positive-type micro-hologram technique as shown in Fig. 10(a), extremely-high accuracy is required in controlling both light irradiation positions.
Since extremely-high position control accuracy is required as described above, a technical difficulty for realizing the positive-type micro-hologram technique is high, and even if the technique is realized, apparatus production costs increase. Consequently, the positive-type micro-hologram technique is not a realistic technique.

Further, there is a problem that prerecording initialization processing is required in the negative-type micro-hologram technique.
Moreover, in a case where the initialization processing is carried out using parallel light as shown in Figs. 12 in particular, there are problems that extremely-high power is required as initialization light and it becomes difficult to form minute recording marks (deletion marks).
Specifically, based on the principle of positive-type micro-holograms described with reference to Fig. 11(a), two light fluxes should originally be collected at the same position in the initialization processing, but when carrying out the initialization processing by collecting two light fluxes as described above, the initialization processing needs to be carried out a number of times corresponding to the set number of layers, which is not realistic. In this regard, the processing time is shortened by using parallel light as described above, but for forming interference fringes using parallel light as described above, extremely-large power is required as compared to the case where the technique of collecting light is adopted as described above. It is also possible to enhance recording sensitivity of the bulk layer 102 for that matter, but in such a case, it becomes extremely difficult to form minute marks.
As can be understood from these points, it is extremely difficult to realize the negative-type micro-hologram technique.

In this regard, the applicant proposes a recording method that uses a void recording (hole recording) technique as disclosed in Patent Document 2 as a new bulk recording method that replaces the micro-hologram technique having the problems as described above.
The void recording method is a method of recording holes (voids) in the bulk layer 102 formed of a recording material such as a photopolymerization-type photopolymer by irradiating laser light onto the bulk layer 102 with relatively-high power. As disclosed in Patent Document 2, refractive indexes of the thus-formed hole portions differ from those of other portions within the bulk layer 102, and optical reflectance at boundary portions thereof is raised. Therefore, the hole portions function as recording marks, and thus information recording that uses hole marks is realized.

Since such a void recording method is not for forming holograms, light irradiation only needs to be performed from one side in the recording. In other words, it is unnecessary to form recording marks by collecting two light fluxes at the same position as in the case of the positive-type micro-hologram technique, and high position control accuracy for collecting two light fluxes at the same position also becomes unnecessary.
Moreover, as compared to the negative-type micro-hologram technique, the initialization processing becomes unnecessary, with the result that the problems regarding the initialization processing described above can be solved.

### Disclosure of the Invention

### Problems to be solved by the Invention

However, the void recording method as described above has the following problems.
Since the void recording method is for forming holes, extremely-high power is required for recording. Specifically, for forming hole marks, a special laser (so-called short-pulse laser) capable of converging extremely-high power in a short time is used.
Alternatively, it is possible to use a CW laser (CW: Continuous Wave) that is normally used in a current optical disc system. In such a case, however, unless laser light is irradiated with power almost at maximum and recording is performed while suppressing a recording speed (disc rotation speed) to some extent, it becomes extremely difficult to stably form hole marks.

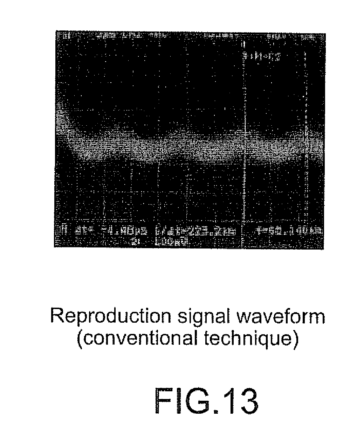

Fig. 13 shows a reproduction signal waveform at a time information recording is performed by the conventional void recording method. It can be seen from the figure that a sufficient S/N is not obtained in the conventional void recording method. It should be noted that in Fig. 13, recording mark lengths are uniformly set to 0.17 µm.

As described above, currently, there is still a large difficulty in realizing the conventional void recording method. In other words, similar to the micro-hologram technique described above, the conventional void recording method is not a realistic method for realizing a large-capacity recording medium as a bulk-type recording medium.

The present invention has been made in view of the problems as described above, and it is an object to enhance realizability of a large-capacity recording medium as a bulk-type recording medium by enabling hole marks to be formed by irradiation of laser light with lower power than in the conventional void recording method.

### Means for solving the Problems

To solve the problems above, according to the present invention, a recording apparatus is structured as follows.
Specifically, a recording apparatus includes:
a laser irradiation portion that irradiates, while varying a focal position, first laser light onto an optical recording medium in which a plurality of resin layers are formed;
a focus control portion that controls the focal position of the first laser light;
a light emission drive portion that performs light emission drive of the first laser light; and
a control portion that controls the light emission drive portion to execute the light emission drive of the first laser light while the first laser light is focused on a boundary surface of the resin layers of the optical recording medium, to record hole marks onto the boundary surface.

Further, according to the present invention, an optical recording medium is structured as follows.
Specifically, according to the present invention, there is provided an optical recording medium in which a plurality of resin layers are formed and, by being irradiated with first laser light while the first laser light is focused on a boundary surface of the resin layers, hole marks are recorded onto the boundary surface.

As described above, according to the present invention, by irradiating the first laser light onto the optical recording medium in which the plurality of resin layers are formed while the first laser light is focused on the boundary surface of the resin layers, the hole marks are recorded onto the boundary surface.
Here, the applicant confirmed from the experimental result that a recording sensitivity of the hole marks is enhanced at the boundary surface of the resin layers. In other words, according to the present invention in which the hole marks are recorded while targeting the boundary surface of the resin layers as described above, laser power requisite for forming hole marks can be suppressed to be lower than that in the conventional art.

### Effect of the Invention

According to the present invention, the laser power requisite for forming hole marks can be suppressed to be lower than that in the case where the conventional void recording method is adopted. As a result, it becomes unnecessary to use a special laser such as a short-pulse laser, and even if a CW laser (CW: Continuous Wave) is used, a recording speed does not need to be sacrificed.
In other words, according to the present invention, weak points of the conventional void recording method can be compensated, and, as a result, realizability of a large-capacity recording medium as a bulk-type recording medium can be additionally enhanced.

### Brief Description of Drawings

[Fig. 1] A cross-sectional structural diagram of an optical recording medium according to a first embodiment.
[Fig. 2] A diagram showing a relationship between laser power and a distance from an interface at a time hole marks are formed.
[Fig. 3] A diagram showing a reproduction signal waveform in a case where interface recording is performed.
[Fig. 4] A diagram for explaining a servo control method according to the embodiment.
[Fig- 5] A diagram showing an internal structure of a recording apparatus according to the embodiment.
[Fig. 6] A cross-sectional structural diagram of an optical recording medium according to a second embodiment.
[Fig. 7] A diagram for explaining a modified example of recording hole marks on only a part of the interfaces.
[Fig. 8] A diagram for explaining a focus servo control method according to the modified example.
[Fig. 9] A diagram showing an internal structure of a recording apparatus according to the modified example.
[Fig. 10] A diagram for explaining a bulk recording technique.
[Figs. 11] Diagrams for explaining a micro-hologram technique.
[Figs. 12] Diagrams for explaining a negative-type micro-hologram technique.
[Fig. 13] A diagram showing a reproduction signal waveform in a case where a conventional void recording method is adopted.

### Best Modes for Carrying Out the Invention

Hereinafter, best modes (hereinafter, referred to as embodiments) of the present invention will be described.
It should be noted that the descriptions will be given in the following order.

### <1. First embodiment>

### [1-1. Optical recording medium as first embodiment]

### [1-2. Recording method as embodiment]

### [1-3. Servo control]

### [1-4. Structure of recording apparatus]

### [1-5. Effect of interface recording]

### <2. Second embodiment>

### <3. Modified example>

### <1. First embodiment>

### [1-1. Optical recording medium as first embodiment]

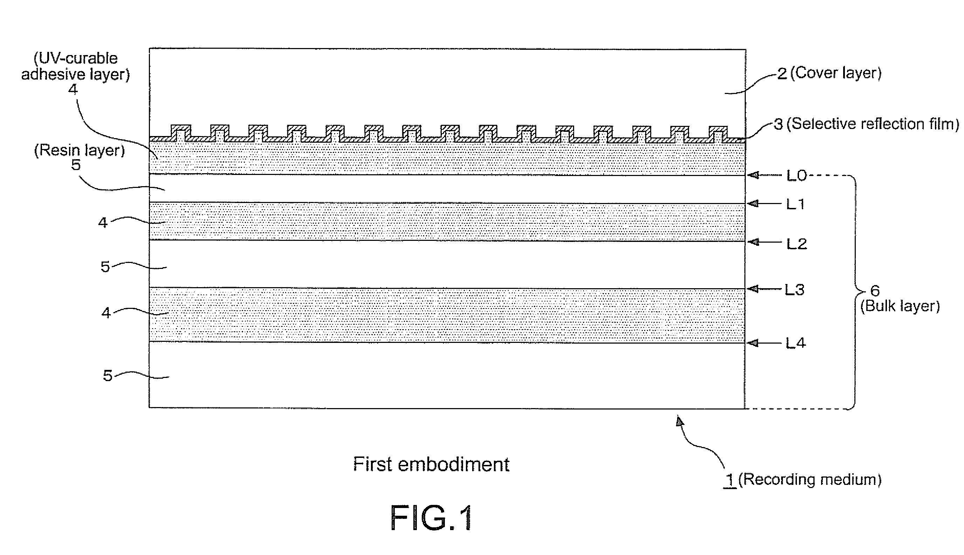

Fig. 1 is a cross-sectional structural diagram of a recording medium 1 as an embodiment of an optical recording medium according to the present invention.
First, as a presupposition, the recording medium 1 of this embodiment is a disc-like recording medium on which mark recording (information recording) is performed by irradiating laser light onto the rotationally-driven recording medium 1. Moreover, reproduction of recorded information is also performed by irradiating laser light onto the rotationally-driven recording medium 1.

As shown in Fig. 1, a cover layer 2 and a selective reflection film 3 are formed in the recording medium 1 of this embodiment in the stated order from an upper layer side, and a UV-curable adhesive layer 4 and a resin layer 5 are repetitively formed below that.
Here, the "upper layer side" used in the specification refers to an upper layer side at a time a surface that laser light from a recording apparatus side to be described later enters faces upward.

The cover layer 2 is formed of a resin such as polycarbonate and an acrylic resin and has, on a lower surface side thereof as shown in the figure, a concavo-convex cross-sectional shape accompanying formation of guide grooves for guiding recording/reproduction positions.
As the guide grooves, continuous grooves or pit strings are formed. When the guide grooves are formed as grooves, for example, by forming the grooves such that they meander cyclically, positional information (address information) is recorded based on cycle information on the meandering.
The cover layer 2 is formed by injection molding or the like using a stamper on which such guide grooves (concavo-convex shape) are formed.

Further, the selective reflection film 3 is formed below the cover layer 2 in which the guide grooves are formed.
Here, in the bulk recording method, in addition to recording light (first laser light) for recording marks onto a bulk layer as the recording layer, servo light (second laser light) is irradiated for obtaining tracking and focus error signals based on the guide grooves as described above.
At this time, if the servo light reaches the bulk layer, there is a fear that mark recording in the bulk layer is adversely influenced thereby. Therefore, a reflection film having selectivity to reflect servo light and cause recording light to transmit therethrough is necessary.
In the conventional bulk recording method, laser light having different wavelengths are used for the recording light and servo light. Therefore, as the selective reflection film 3, a selective reflection film having wavelength selectivity to reflect light having the same wavelength range as the servo light and cause light having other wavelengths to transmit therethrough is used.

Below the selective reflection film 3, a bulk layer 6 is formed via the UV-curable adhesive layers 4.
The UV-curable adhesive layers 4 are each formed of a UV-curable resin and bond the resin layers 5 formed below them to the selective reflection film 3.
In the case of this example, a so-called HPSA (sheet-type UV-curable PSA: Pressure Sensitive Adhesive) is used as the UV-curable resin forming the UV-curable adhesive layers 4.

Here, in the conventional bulk-recording-type optical recording medium, a bulk layer (bulk layer 102 in Fig. 10) formed of a hologram recording material such as a photopolymerization-type photopolymer is bonded to the cover layer 2 side via a UV-curable adhesive such as the HPSA described above.
From this point, a portion below the UV-curable adhesive layer 4 positioned immediately below the selective reflection film 3 is referred to as bulk layer 6.

In the case of the first embodiment, the bulk layer 6 is formed by alternate laminations of the resin layers 5 and the UV-curable adhesive layers 4.
The resin layers 5 are each formed of a resin different from the resin used for the UV-curable adhesive layers 4. In the case of this example, a sheet-type polycarbonate (so-called polycarbonate sheet) is used.
As described above, in the first embodiment, the bulk layer 6 is formed by laminating layers formed of different resin materials.

Here, although the bulk layer 6 structured by laminating 3 resin layers 5 and 2 UV-curable adhesive layers 4 is exemplified in Fig. 1 for convenience of illustrations, in actuality, the number of resin layers in the bulk layer 6 is about several ten layers (e.g., 20 layers), thus leading to an increase of a recording capacity.

A production method of the recording medium 1 of the first embodiment having the structure as described above will be described.
First, as a generation process of the cover layer 2, the cover layer 2 in which guide grooves are formed on one surface is generated by injection molding using a stamper as described above.
Next, as a reflection film deposition process, the selective reflection film 3 is deposited on the surface of the cover layer 2 on which the guide grooves are formed by, for example, sputtering or vapor deposition.

After the selective reflection film 3 is deposited on the cover layer 2 as described above, an HPSA of a predetermined thickness is mounted on the selective reflection film 3 as the UV-curable adhesive layer 4, and a resin sheet (polycarbonate sheet in this example) of a predetermined thickness is mounted on the HPSA. After that, ultraviolet irradiation is performed. As a result, the UV-curable adhesive layer 4 and the resin layer 5 are first formed one each.
In the same manner, the process of performing ultraviolet irradiation after mounting the HPSA and then mounting the resin sheet on the HPSA is repeated a predetermined number of times. As a result, a recording medium 1 including the bulk layer 6 structured by alternately laminating predetermined numbers of resin layers 5 and UV-curable adhesive layers 4 is generated.

### [1-2. Recording method as embodiment]

As described above, in the recording medium 1 of this embodiment, a plurality of layers formed of resin are laminated as the UV-curable adhesive layers 4 and the resin layers 5.
In this embodiment, hole marks (voids) are recorded while laser light is focused on boundary surfaces among such resin layers formed in the recording medium 1. In other words, hole marks are recorded onto the boundary surfaces.
In the recording medium 1 shown in Fig. 1, there are a total of 5 boundary surfaces L0 to L4 among the resin layers. Therefore, it can be considered that the recording medium 1 in this case includes 5 recording layers.
It should be noted that hereinafter, the "boundary surface" will also be referred to as "interface".

Here, it has been confirmed that a recording sensitivity of hole marks is enhanced at the interfaces among the resin layers as described above.

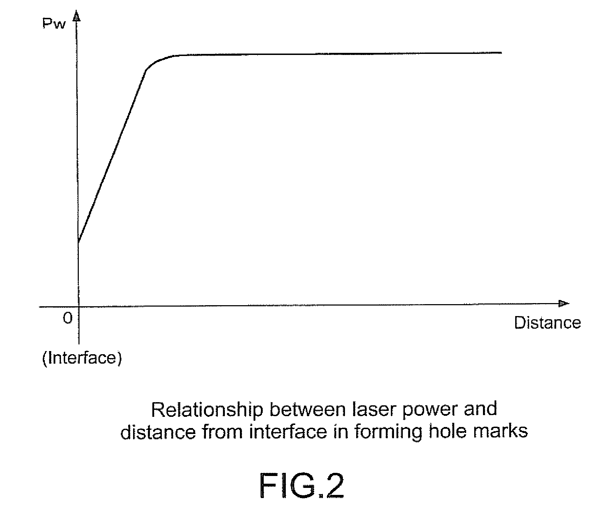

Fig. 2 shows a relationship between laser power and a distance from the interface at a time hole marks are formed.
As shown in the figure, laser power necessary for forming hole marks is lowest at the interface. According to Fig. 2, laser power necessary for forming hole marks gradually increases based on a distance from the interface and becomes constant thereafter in a section between the interface and a point at a certain distance. In other words, in the section between the interface and a point at a certain distance, it is necessary to gradually increase the laser power based on the distance from the interface for forming hole marks, and by setting the laser power to be constant, it becomes possible to form hole marks irrespective of the distance from the interface.

As described above, the recording sensitivity of hole marks becomes most favorable at the interface. Therefore, according to this embodiment that records hole marks onto the interfaces, stable recording can be performed with lower power than in a conventional void recording method that records hole marks inside the bulk layer.

It should be noted that the reason why the recording sensitivity of hole marks is thus enhanced at the interface is considered to be because light is more apt to be absorbed at the interface than the inside of a resin. It is also considered that hole marks can be formed with ease since a pressure is smaller at the interface than inside a resin.

Incidentally, in a case where a method of recording hole marks onto an interface is adopted as described above, there is a fear that interlayer crosstalk may be caused at a time a distance between the interfaces is too small.
Therefore, in this embodiment, the distance between the interfaces is set to be 10 µm or less. In other words, the thicknesses of the UV-curable adhesive layers 4 and resin layers 5 forming the bulk layer 6 shown in Fig. 1 are all set to be 10 µm or less.

Further, in this embodiment, for preventing multiple interferences from occurring, intervals among the interfaces are irregular. In other words, as shown in Fig. 1, in this embodiment, the interlayer intervals are set to be irregular so that the thickness of the layer located more on the lower surface side becomes larger.
It should be noted that the method of setting the intervals among the interfaces to be irregular is not limited to the method described above, and other methods may of course be used.

Moreover, in this embodiment, the thickness of the bulk layer 6 is set to be 300 µm or less.

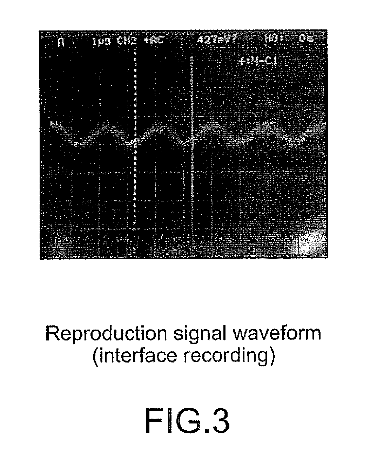

For comparison, Fig. 3 shows a reproduction signal waveform in a case where hole marks are recorded onto the interface. In Fig. 3, the recording mark length is 0. 17 µm as in Fig. 13.
It can be seen from comparing Figs. 3 and 13 that S/N has apparently improved more in this embodiment in which interface recording is performed than in a case where the conventional void recording is performed.

### [1-3. Servo control]

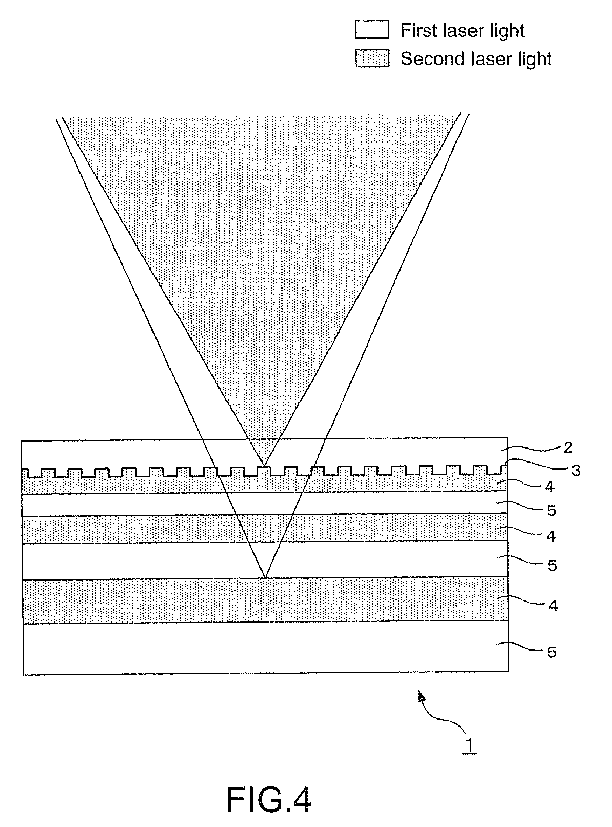

Subsequently, servo control that is executed when performing recording/reproduction using the recording medium 1 of this embodiment will be described with reference to Fig. 4.
In Fig. 4, as well as the laser light for forming hole marks (first laser light: "first laser light" in figure), laser light as servo light having different wavelength from the first laser light (second laser light: "second laser light" in figure) is irradiated onto the recording medium 1 as described above.
As will be described later, the first laser light and the second laser light are irradiated onto the recording medium 1 via a common objective lens.

Here, in the recording medium 1, the interface as a recording target position for hole marks is simply an interface between resins, and guide grooves constituted of pits, grooves, or the like are not formed therein. Therefore, during recording in which hole marks are not yet formed, tracking servo using the first laser light cannot be executed.
From this point, regarding the tracking servo during recording, the second laser light is used. Specifically, a tracking error signal that is based on reflected light of the second laser light focused on the selective reflection film 3 is generated, and positional control of the objective lens in a tracking direction is carried out based on the tracking error signal.

On the other hand, during recording, the first laser light is used for focus servo.
Specifically, since there is an intensity difference of the first laser light between the state where the first laser light is focused on the interface and the state where the first laser light is focused on a portion other than the interface, this point is used to carry out focus servo control using reflected light of the first laser light.

Further, during reproduction of the recording medium 1 onto which hole marks are already recorded, reflected light of the first laser light is used in both the tracking servo and the focus servo. In other words, irradiation of the second laser light is unnecessary during reproduction.

Here, from the descriptions above, the first laser light and the second laser light are irradiated onto the recording medium 1 via a common objective lens, and during recording, a spot position of the first laser light in the tracking direction is automatically controlled by positional control of the objective lens that is based on the reflected light of the second laser light. In other words, by driving the common objective lens based on a tracking error signal generated based on the reflected light of the second laser light, tracking servo control that is executed based on the reflected light of the second laser light equivalently acts on the first laser light side.

It should be noted that as a reminder, it is necessary to differentiate the focal position of the first laser light and that of the second laser light regarding the focus direction. Specifically, as can be understood from Fig. 4, while the focal position of the second laser light is to be set on the selective reflection film 3 so that a tracking error signal that is based on the reflected light from the selective reflection film 3 in which a concavo-convex shape is formed by the guide grooves is appropriately generated, the focal position of the first laser light is to be set with respect to the interface as a recording target.
Considering this point, it is necessary to use each of the first laser light and the second laser light to execute independent control in the focus direction.

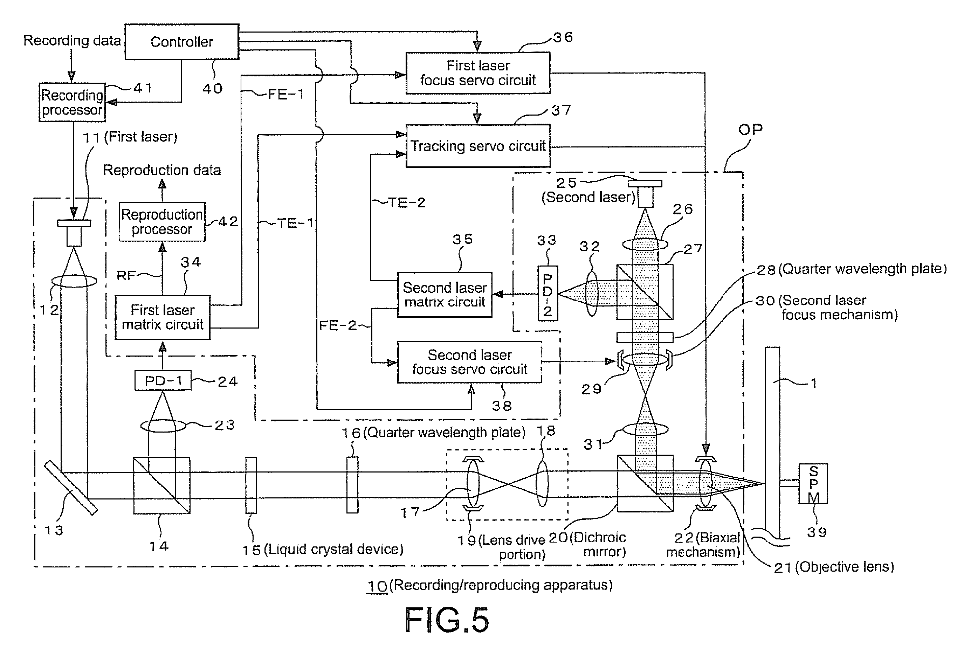

As described above, the focus control of the first laser light in this case is executed using the reflected light of the first laser light in both recording and reproduction. Considering this point, in this example, the focus control of the first laser light is executed by driving the common objective lens, and the focus control of the second laser light is executed by driving a mechanism provided for independently controlling the focal position of the second laser light (corresponding to second laser focus mechanism 30 in Fig. 5).

Summarizing the descriptions above, the servo control in the case of this embodiment is executed as follows.

### · First laser light side

During recording ... Focus servo is executed by driving objective lens using reflected light of first laser light (tracking servo is executed automatically by driving objective lens using reflected light of second laser light)
During reproduction ... Focus servo and tracking servo are both executed by driving objective lens using reflected light of first laser light

### · Second laser light side

During recording ... Focus servo is executed by driving second laser focus mechanism using reflected light of second laser light, and tracking servo is executed by driving objective lens using reflected light of second laser light
During reproduction ... Irradiation of second laser light itself can be omitted

### [1-4. Structure of recording apparatus]

Fig. 5 shows an internal structure of a recording/reproducing apparatus 10 that performs recording and reproduction with respect to the recording medium 1 shown in Fig. 1.
First, the recording medium 1 loaded into the recording/reproducing apparatus 10 is rotationally driven by a spindle motor (SPM) 39 shown in the figure.
In the recording/reproducing apparatus 10, an optical pickup OP for irradiating the first laser light and the second laser light onto the rotationally-driven recording medium 1 is provided.

Inside the optical pickup OP, a first laser 11 as a light source of the first laser light for recording information by hole marks and reproducing information recorded by hole marks and a second laser 25 as a light source of the second laser light as the servo light described above are provided.
Here, as described above, the first laser light and the second laser light have different wavelengths. In the case of this example, the wavelength of the first laser light is about 400 nm (so-called bluish-purple laser light), and the wavelength of the second laser light is about 650 nm (so-called red laser light).

Further, inside the optical pickup OP, an objective lens 21 as an output terminal for the first laser light and the second laser light with respect to the recording medium 1 is provided.
Furthermore, a first photodetector (PD-1 in figure) 24 for receiving reflected light of the first laser light from the recording medium 1 and a second photodetector (PD-2 in figure) 33 for receiving reflected light of the second laser light from the recording medium 1 are provided.

Inside the optical pickup OP, an optical system for guiding, as well as guide the first laser light emitted from the first laser 11 to the objective lens 21, the reflected light of the first laser light from the recording medium 1, that has entered the objective lens 21, to the first photodetector 24 is formed.
Specifically, the first laser light emitted from the first laser 11 is made parallel light via a collimator lens 12 and enters a polarization beam splitter 14 after optical axes thereof are bent 90 degrees by a mirror 13. The polarization beam splitter 14 is structured to cause the first laser light that has been emitted from the first laser 11 and entered via the mirror 13 to transmit therethrough.

The first laser light that has been transmitted through the polarization beam splitter 14 is transmitted through a liquid crystal device 15 and a quarter wavelength plate 16.
Here, the liquid crystal device 15 is provided for correcting a so-called off-axis aberration such as a coma aberration and an astigmatism.

The first laser light that has been transmitted through the quarter wavelength plate 16 enters an expander constituted of lenses 17 and 18. In the expander, the lens 17 is a movable lens, and the lens 18 is a fixed lens. By driving the lens 17 in a direction parallel to the optical axis of the first laser light by a lens drive portion 19 shown in the figure, a spherical aberration is corrected for the first laser light.

The first laser light enters a dichroic mirror 20 via the expander. The dichroic mirror 20 is structured to cause light having the same wavelength range as the first laser light to transmit therethrough and reflect light having other wavelengths. Therefore, the first laser light that has entered as described above is transmitted through the dichroic mirror 20.

The first laser light that has been transmitted through the dichroic mirror 20 is irradiated onto the recording medium 1 via the objective lens 21.
With respect to the objective lens 21, a biaxial mechanism 22 that holds the objective lens 21 in a state where it can be displaced in the focus direction (approaching/parting direction with respect to recording medium 1) and the tracking direction (direction orthogonal to focus direction: radial direction of recording medium 1) is provided.
As drive currents are applied to a focus coil and tracking coil of a first laser focus servo circuit 36 and tracking servo circuit 37, respectively, the biaxial mechanism 22 displaces the objective lens 21 in the focus direction and the tracking direction.

By irradiating the first laser light onto the recording medium 1 as described above, reflected light of the first laser light can be obtained from the recording medium 1. The thus-obtained reflected light of the first laser light is guided to the dichroic mirror 20 via the objective lens 21 to be transmitted therethrough.
The reflected light of the first laser light that has been transmitted through the dichroic mirror 20 enters, after passing through the lenses 18 and 17 constituting the expander described above, the polarization beam splitter 14 via the quarter wavelength plate 16 and the liquid crystal device 15.

Here, by an operation of the quarter wavelength plate 16 and a reflection operation by the recording medium 1, a polarization direction of the reflected light of the first laser light (return light) that enters the polarization beam splitter 14 as described above differs 90 degrees from that of the first laser light that has entered the polarization beam splitter 14 from the first laser 11 side (emission light). As a result, the reflected light of the first laser light that has entered as described above is reflected by the polarization beam splitter 14.

The reflected light of the first laser light that has been reflected by the polarization beam splitter 14 as described above is collected on a detection surface of the first photodetector 24 via a collective lens 23.

Further, inside the optical pickup OP, in addition to the structure of the optical system regarding the first laser light described above, an optical system for guiding, as well as guide the second laser light emitted from the second laser 25 to the objective lens 21, the reflected light of the second laser light from the recording medium 1, that has entered the objective lens 21, to the second photodetector 33 is formed.
As shown in the figure, the second laser light emitted from the second laser 25 is made parallel light via a collimator lens 26 and enters a polarization beam splitter 27 after that. The polarization beam splitter 27 is structured to cause the second laser light that has entered via the second laser 25 and the collimator lens 26 (emission light) to transmit therethrough.

The second laser light that has been transmitted through the polarization beam splitter 27 enters a second laser focus lens 29 via a quarter wavelength plate 28.
As shown in the figure, a second laser focus mechanism 30 is provided with respect to the second laser focus lens 29. The second laser focus mechanism 30 holds the second laser focus lens 29 such that it can be displaced in a direction parallel to the optical axis of the second laser light and also drives the second laser focus lens 29 as a drive current is applied to a focus coil incorporated therein.

The second laser light that has passed through the second laser focus lens 29 is made parallel light via a lens 31 after light is focused at a position corresponding to the drive state of the second laser focus mechanism 30 and enters the dichroic mirror 20.

As described above, the dichroic mirror 20 is structured to cause light having the same wavelength range as the first laser light to transmit therethrough and reflect light having other wavelengths. Therefore, the second laser light is reflected by the dichroic mirror 20 and irradiated onto the recording medium 1 via the objective lens 21 as shown in the figure.

Further, the reflected light of the second laser light obtained by the irradiation of the second laser light onto the recording medium 1 as described above is reflected by the dichroic mirror 20 via the objective lens 21 and enters the polarization beam splitter 27 after passing through the lens 31, the second laser focus lens 29, and the quarter wavelength plate 28.
Similar to the first laser light, by an operation of the quarter wavelength plate 28 and a reflection operation of the recording medium 1, a polarization direction of the reflected light of the second laser light (return light) that has thus entered from the recording medium 1 side differs 90 degrees from that of the emission light. Therefore, the reflected light of the second laser light as the return light is reflected by the polarization beam splitter 27.

The reflected light of the second laser light reflected by the polarization beam splitter 27 as described above is collected on a detection surface of the second photodetector 33 via a collective lens 32.

Although descriptions using the figure will be omitted herein, in actuality, a slide drive portion that slidably drives the entire optical pickup OP in the tracking direction is provided in the recording/reproducing apparatus 10, and by the slide drive portion driving the optical pickup OP, the irradiation position of the laser light can be displaced within a wide range.

Moreover, also provided in the recording/reproducing apparatus 10 together with the optical pickup OP and the spindle motor 39 described above are a first laser matrix circuit 34, a second laser matrix circuit 35, the first laser focus servo circuit 36, the tracking servo circuit 37, a second laser focus servo circuit 38, a controller 40, a recording processor 41, and a reproduction processor 42.

First, data to be recorded onto the recording medium 1 (recording data) is input to the recording processor 41. By adding an error correction code to or performing a predetermined recording modulation encoding on the input recording data, for example, the recording processor 41 obtains a recording modulation data string as a binary data string of "0" and "1" that is actually recorded onto the recording medium 1.
The recording processor 41 drives light emission of the first laser 11 based on the thus-generated recording modulation data string in response to an instruction from the controller 40.
Further, the first laser matrix circuit 34 includes a current-voltage conversion circuit and a matrix operation/amplifier circuit in accordance with output currents from a plurality of light receiving devices as the first photodetector 24 and generates signals requisite for matrix operation processing.
Specifically, a high-frequency signal (hereinafter, referred to as reproduction signal RF) that corresponds to a reproduction signal obtained by reproducing the recording modulation data string described above and a focus error signal FE and tracking error signal TE used for servo control are generated.
Here, the focus error signal FE and the tracking error signal TE in this example are of two types, one being a signal based on reflected light of the first laser light and the other being a signal based on reflected light of the second laser light. Hereinafter, for differentiating the signals, the focus error signal FE generated by the first laser matrix circuit 34 will be referred to as focus error signal FE-1, and the tracking error signal TE generated by the first laser matrix circuit 34 will similarly be referred to as tracking error signal TE-1.

The reproduction signal RF generated by the first laser matrix circuit 34 is supplied to the reproduction processor 42.
Further, the focus error signal FE-1 is supplied to the first laser focus servo circuit 36, and the tracking error signal TE-1 is supplied to the tracking servo circuit 37.

The reproduction processor 42 carries out reproduction processing for restoring the recording data described above, such as binary processing and decoding/error correction processing of recording modulation codes, on the reproduction signal RF generated by the first laser matrix circuit 34 and obtains reproduction data by reproducing the recording data.

Further, the first laser focus servo circuit 36 generates a focus servo signal based on the focus error signal FE-1 and executes focus servo control of the first laser light by driving the focus coil of the biaxial mechanism 22 based on the focus servo signal.
The first laser focus servo circuit 36 also carries out an interlayer jump operation among the boundary surfaces (recording surfaces) L0 to L4 formed in the recording medium 1 and draw-in of focus servo with respect to a required boundary surface L in response to instructions from the controller 40.

The second laser matrix circuit 35 includes a current-voltage conversion circuit and a matrix operation/amplifier circuit in accordance with output currents from a plurality of light receiving devices as the second photodetector 33 and generates signals requisite for matrix operation processing.
Specifically, the second laser matrix circuit 35 generates a focus error signal FE-2 and tracking error signal TE-2 used for servo control.
The focus error signal FE-2 is supplied to the second laser focus servo circuit 38, and the tracking error signal TE-2 is supplied to the tracking servo circuit 37.

The second laser focus servo circuit 38 generates a focus servo signal that is based on the focus error signal FE-2 and executes focus servo control of the second laser light by driving the second laser focus mechanism 30 described above based on the focus servo signal.
At this time, the second laser focus servo circuit 38 carries out draw-in of focus servo with respect to the selective reflection film 3 (guide groove formation surface) formed in the recording medium 1 in response to an instruction from the controller 40.

In response to an instruction from the controller 40, the tracking servo circuit 37 generates a tracking servo signal that is based on either the tracking error signal TE-1 from the first laser matrix circuit 34 or the tracking error signal TE-2 from the second laser matrix circuit 35 and drives the tracking coil of the biaxial mechanism 22 based on the tracking servo signal. In other words, regarding positional control of the objective lens 21 in the tracking direction, either the tracking servo control based on reflected light of the first laser light or tracking servo control based on reflected light of the second laser light is executed.

The controller 40 is constituted of a microcomputer equipped with, for example, a CPU (Central Processing Circuit) and a memory (storage apparatus) such as a ROM (Read Only Memory) and controls the entire recording/reproducing apparatus 1 by executing control and processing according to programs stored in the ROM, for example.
Specifically, during recording, by instructing the recording processor 41 to record while instructing the first laser focus servo circuit 36 to focus the first laser light on a required boundary surface L (i.e., while executing focus servo control targeting required boundary surface L), the controller 40 executes an operation for forming hole marks corresponding to the recording data onto the boundary surface L. In other words, an information recording operation of forming hole marks is executed.
Here, as described above, tracking servo control during recording is to be executed based on the reflected light of the second laser light. Therefore, during recording, the controller 40 instructs the tracking servo circuit 37 to execute tracking servo control based on the tracking error signal TE-2.
Also during recording, the controller 40 instructs the second laser focus servo circuit 38 to execute focus servo control.

On the other hand, during reproduction, the controller 40 instructs the first laser focus servo circuit 36 to focus the first laser light on the boundary surface L onto which data to be reproduced is recorded. In other words, regarding the first laser light, focus servo control targeting the boundary surface L is executed.
Further, during reproduction, the controller 40 instructs the tracking servo circuit 37 to execute tracking servo control based on the tracking error signal TE-1.

It should be noted that as described above, during reproduction, it is not always necessary to execute servo control based on the reflected light of the second laser light. However, in a case where address information for reproduction is detected based on information recorded by wobbling of grooves or address information recorded by pit strings is detected, for example, servo control of the second laser light targeting the guide groove formation surface (selective reflection film 3) can be executed during reproduction.

### [1-5. Effect of interface recording]

According to the recording method of this embodiment described above, since hole marks are recorded while the first laser light is focused on the interface, laser power necessary for stably forming hole marks can be suppressed as compared to the case where the conventional void recording method is adopted. As a result, it becomes unnecessary to use a special laser such as a short-pulse laser, and even when a CW laser (CW: Continuous Wave) is used, the recording speed does not need to be sacrificed.
In other words, according to this embodiment, it is possible to compensate weak points of the conventional void recording method, and, as a result, additionally enhance realizability of a large-capacity recording medium as a bulk-type recording medium.

### <2. Second embodiment>

Subsequently, a second embodiment will be described.
In the second embodiment, the plurality of resin layers constituting the bulk layer are formed of the same material.

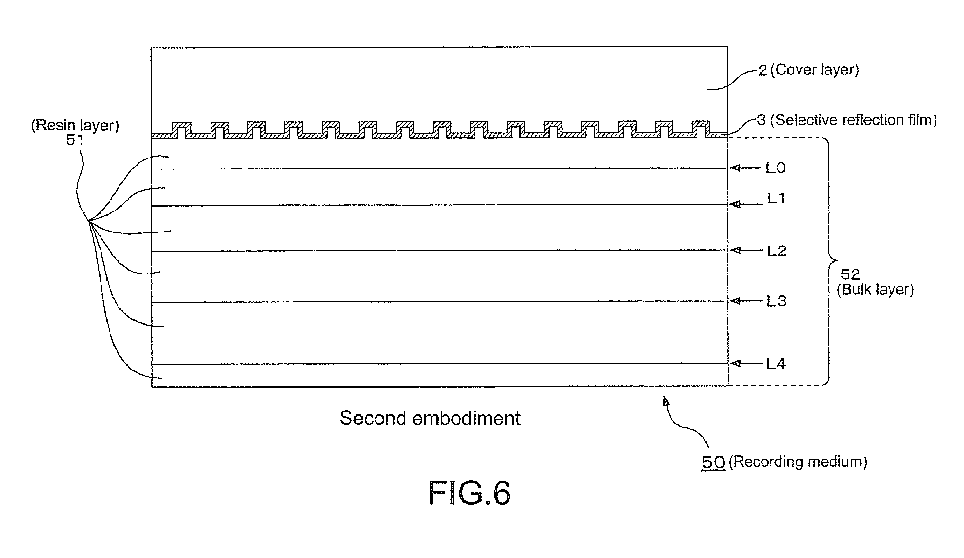

Fig. 6 is a cross-sectional structural diagram of a recording medium 50 according to the second embodiment.
As shown in Fig. 6, in the recording medium 50 of the second embodiment, the cover layer 2 on which the selective reflection film 3 is formed as in the first embodiment is used. In this case, a bulk layer 52 formed by laminating a plurality of resin layers 51 is formed below the selective reflection film 3. In other words, the bulk layer 52 in this case is constituted of a plurality of layers formed of the same resin material.

There is, for example, the following method as a production method of such a recording medium 50 of the second embodiment.
First, also in this case, the generation process of the cover layer 2 and the deposition process of the selective reflection film 3 are the same as those of the first embodiment.
In addition, in this case, in generating the bulk layer 52, using a UV-curable resin as the material of the resin layers 51, the UV-curable resin is first spin-coated on the selective reflection film 3, and ultraviolet rays are irradiated after that, with the result that a first layer of the resin layers 51 is formed. For the second layer and subsequent layers, spin coat of the UV-curable resin and ultraviolet irradiation are repeated in the same manner. As a result, the bulk layer 52 in which the plurality of resin layers 51 formed of the same material are laminated is formed below the selective reflection film 3.

In the second embodiment, hole marks are recorded on the interfaces of the plurality of resin layers 51 formed of the same material as described above. Fig. 6 shows an example where 6 resin layers 51 are formed in the bulk layer 52 and thus a total of 5 interfaces L0 to L4 are formed, During recording, hole marks are recorded onto the interfaces L0 to L4 while the first laser light is focused on the required interface L as appropriate.

Even when hole marks are recorded onto the interfaces of the resin layers formed of the same material as described above, laser power required for forming hole marks can be reduced as compared to the conventional art as in the first embodiment.

### <3. Modified example>

The embodiments of the present invention have been described above, but the present invention is not limited to the specific examples described heretofore.
For example, in the descriptions above, the example of a case where hole marks are recorded on all the interfaces formed in the bulk layer has been described. However, it is also possible to record hole marks on only a part of the interfaces.

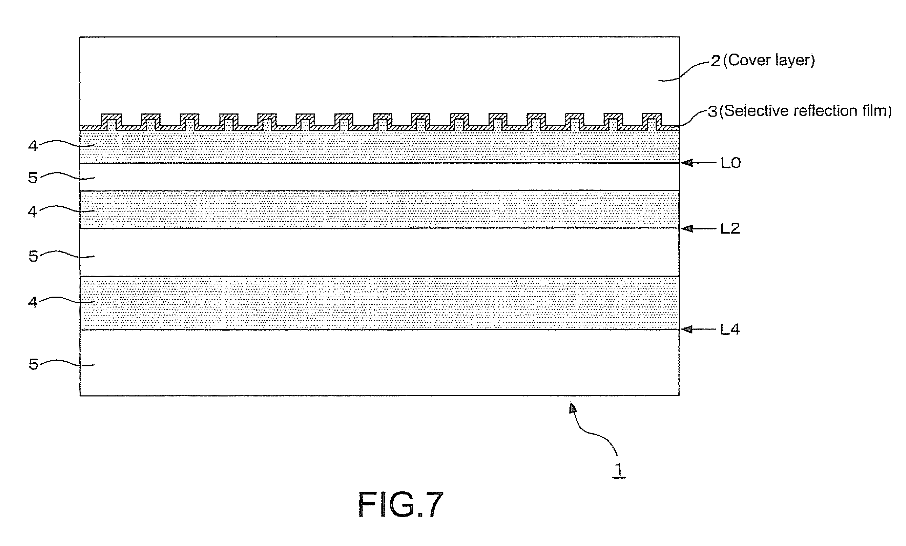

Fig. 7 shows, as an example of recording hole marks on only a part of the interfaces, a case where hole marks are recorded only on the interfaces L that has the UV-curable adhesive layer 4 on the upper side and the resin layer 5 on the lower side (L0, L2, L4). In other words, when resin layers formed of two different materials are laminated alternately, hole marks are recorded only on an interface that has a resin layer formed of a first material on the upper side and a second resin layer on the lower side.
Conversely, although not shown in the figure, it is also possible to record hole marks only on the interfaces that have the resin layer 5 on the upper side and the UV-curable adhesive layer 4 on the lower side (L1, L3).

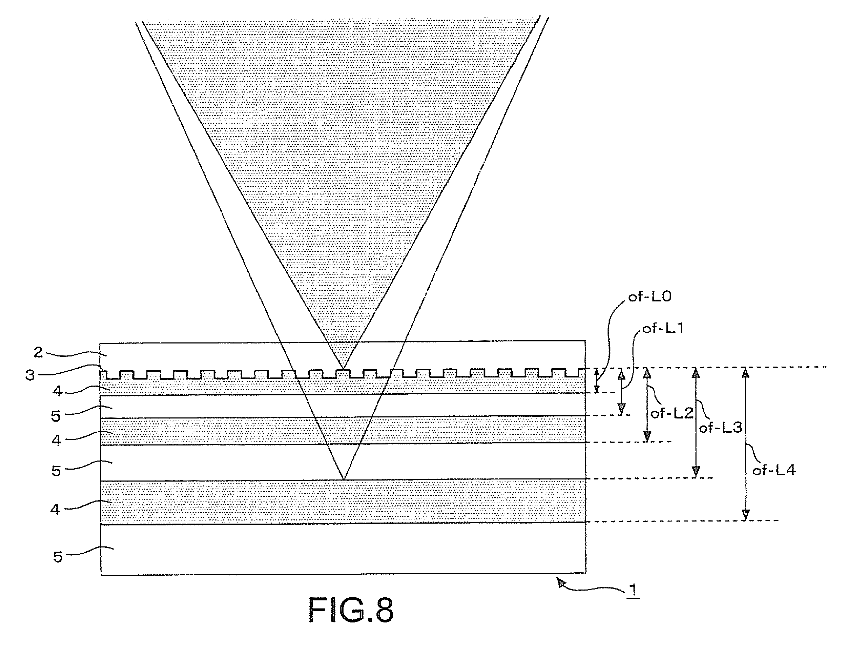

In the descriptions above, focus servo control of the first laser light during recording has been executed using the reflected light of the first laser light. However, focus servo control of the first laser light during recording can also be realized by applying an offset based on the selective reflection film 3 (guide groove formation surface) as shown in Fig. 8.

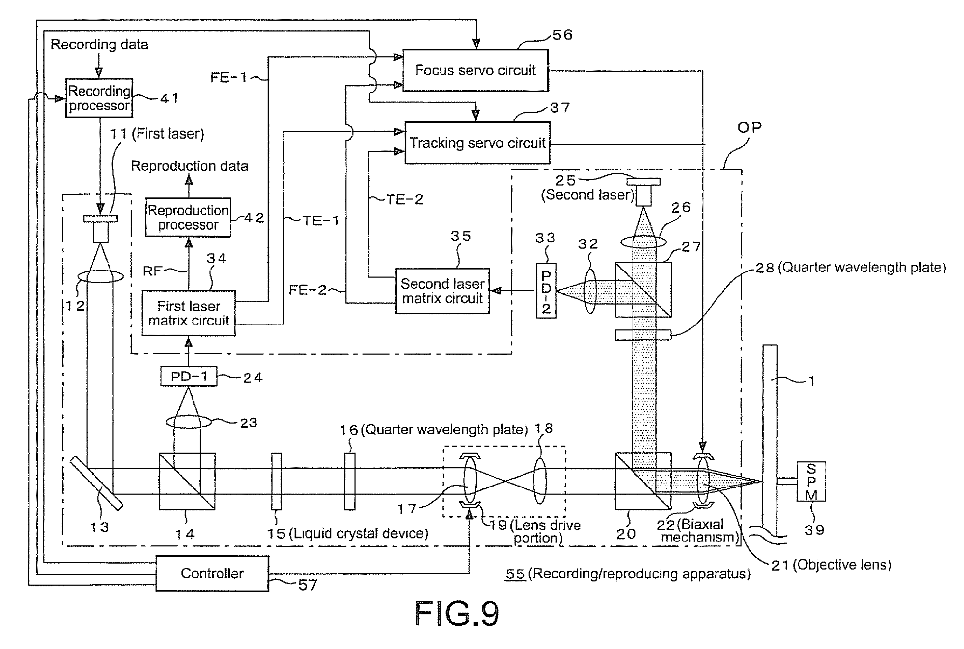

Fig. 9 shows an internal structure of a recording/reproducing apparatus 55 for realizing focus servo control of the first laser light during recording by applying an offset based on the guide groove formation surface as described above. It should be noted that in the figure, parts already described with reference to Fig. 5 are denoted by the same symbols, and descriptions thereof will be omitted.
As can be seen from comparing Figs. 9 and 5, in the recording/reproducing apparatus 55, the second laser focus servo circuit 38, the second laser focus mechanism 30, the second laser focus lens 29, and the lens 31 that have been included in the recording/reproducing apparatus 10 shown in Fig. 5 and used for independently executing focus control of the second laser light are omitted.
In this case, a focus servo circuit 56 is provided in place of the first laser focus servo circuit 36 included in the recording/reproducing apparatus 10 shown in Fig. 5, and a focus error signal FE-1 generated by the first laser matrix circuit 34 and a focus error signal FE-2 generated by the second laser matrix circuit 35 are supplied to the focus servo circuit 56.
Based on an instruction from a controller 57, the focus servo circuit 56 generates a focus servo signal based on a focus error signal FE-2 from the second laser matrix circuit 35 during recording and drives the focus coil of the biaxial mechanism 22 based on the focus servo signal. In other words, the focal position of the objective lens 21 during recording in this case is set to be constant on the selective reflection film 3 (guide groove formation surface).

In addition, in the recording/reproducing apparatus 55 shown in Fig. 9, the controller 57 drives the lens drive portion 19 during recording and applies an offset to the focal position of the first laser light. Specifically, during recording, the controller 57 drives the lens drive portion 19 such that an offset of as shown in Fig. 8 is applied in accordance with the position of the interface L as a recording target.
Specifically, a distance between the guide groove formation surface and each of the interfaces L0 to L4 (of-L0 to of-L4 in Fig. 8) is defined by a format in advance. In the controller 57, information on a drive amount of the lens drive portion 19 that is necessary for focusing the first laser light on the interfaces L, the information being obtained based on information on the distances to the interfaces L that are defined by a format in advance, is set in advance.
The controller 57 drives the lens drive portion 19 based on the preset information on a drive amount for each of the interfaces L. In other words, the lens drive portion 19 is driven based on the information on a drive amount set in accordance with the interface L as the recording target,
As a result, the focal position of the first laser light during recording matches the interface L as the recording target.

It should be noted that during recording in the recording/reproducing apparatus 55 shown in Fig. 9, based on an instruction from the controller 57, the focus servo circuit 56 generates a focus servo signal based on a focus error signal FE-1 from the first laser matrix circuit 34 and drives the focus coil of the biaxial mechanism 22 based on the focus servo signal. In other words, in this case, focus servo of the first laser light during reproduction is executed based on the reflected light of the first laser light as in the recording/reproducing apparatus 10 shown in Fig. 5.
Moreover, since the tracking servo circuit 37 is provided also in this case, tracking servo during reproduction is executed based on the reflected light of the first laser light (reflected light from hole mark string). It should be noted that as can also be understood from this point, also in this case, irradiation of the second laser light during reproduction can be omitted.

Here, the method for focus servo control described with reference to Figs. 8 and 9 is favorable in a case where a reflected light intensity from the interfaces L in a state where hole marks are not yet recorded is weak.

Further, in the descriptions above, an HPSA, polycarbonate, and the like have been exemplified as the material of the resin layers forming the interfaces. However, resins such as a light-curable resin, a light-polymerized resin, an optically-transparent resin, and a high-performance engineering plastic material only need to be used as the material of the resin layers in the present invention.

Further, the production method of an optical recording medium is not to be limited to that exemplified in the embodiments.
For example, regarding the production method of an optical recording medium as the first embodiment in which layers formed of different resin materials are laminated, the "plurality of resin layers" have been formed by laminating sheet-type resins, but instead, the "plurality of resin layers" may be generated by repeating the spin coat and ultraviolet irradiation. Specifically, in this case, a UV-curable resin (first material) is spin-coated on the selective reflection film 3 formed by the reflection film deposition process and irradiated with ultraviolet rays after that. Then, a UV-curable resin different from the UV-curable resin above (second material) is similarly spin-coated on the resin layer cured by the ultraviolet irradiation and irradiated with ultraviolet rays. By thus alternately repeating the spin coat and ultraviolet irradiation of a UV-curable resin as the first material and the spin coat and ultraviolet irradiation of a UV-curable resin as the second material, an optical recording medium in which a plurality of layers formed of different resin materials are laminated can be produced.

Further, regarding the optical recording medium in which a plurality of layers formed of the same resin material are laminated, the second embodiment has exemplified the production method in which the spin coat and ultraviolet irradiation of a UV-curable resin are repeated, but instead, a method of generating in advance a bulk layer in which a plurality of layers formed of the same resin material are laminated and bonding the bulk layer to the selective reflection film 3 using a UV-curable adhesive such as an HPSA may be adopted.

Moreover, although refractive indexes of the resin layers to be laminated are not specifically referred to in the descriptions above, the refractive indexes of the resin layers to be laminated may either be the same or different. When differentiating the refractive indexes, the refractive indexes of at least the adjacent resin layers only need to differ.
With or without the same refractive index for the resin layers to be laminated, the point of carrying out interface recording is the same, and thus the point that hole marks can be recorded with lower power than that in the case where the conventional void recording method is adopted does not change.

Furthermore, the example of a case where guide grooves are formed on the optical recording medium has been described as the structure to enable a recording (and reproduction) position to be guided in the description above, a structure in which marks are recorded onto, for example, phase change films instead of the guide grooves may be adopted. Specifically, based on the thus-recorded position guide mark strings, focus/tracking error signals, address information, and the like are obtained.

Further, although the example of a case where a disc-like recording medium is used as the optical recording medium of the present invention has been described above, the recording medium may take other shapes such as a rectangle.

### Description of Symbols

- 1: recording medium
- 2: cover layer
- 3: selective reflection film
- 4: UV-curable adhesive layer
- 5, 51: resin layer
- 6, 52: bulk layer
- 10, 55: recording/reproducing apparatus
- 11: first laser
- 12, 26: collimator lens
- 13: mirror
- 14, 27: polarization beam splitter
- 15: liquid crystal device
- 16, 28: quarter wavelength plate
- 17, 18, 31: lens
- 20: dichroic mirror
- 21: objective lens
- 22: biaxial mechanism
- 23, 32: collective lens
- 24: first photodetector
- 25: second laser
- 29: second laser focus lens
- 30: second laser focus mechanism
- 33: second photodetector
- 34: first laser matrix circuit
- 35: second laser matrix circuit
- 36: first laser focus servo circuit
- 37: tracking servo circuit
- 38: second laser focus servo circuit
- 39: spindle motor
- 40, 57: controller
- 41: recording processor
- 42: reproduction processor
- 56: focus servo circuit
- L0-L4: interface (boundary surface)

## Claims

1. A recording apparatus, comprising:
a laser irradiation portion that irradiates, while varying a focal position, first laser light onto an optical recording medium in which a plurality of resin layers are formed;
a focus control portion that controls the focal position of the first laser light;
a light emission drive portion that performs light emission drive of the first laser light; and
a control portion that controls the light emission drive portion to execute the light emission drive of the first laser light while the first laser light is focused on a boundary surface of the resin layers of the optical recording medium, to record hole marks onto the boundary surface.

2. The recording apparatus according to claim 1, further comprising
a first light reception portion that receives return light of the first laser light irradiated onto the optical recording medium,
wherein the control portion controls the focus control portion to execute focus servo control of the first laser light on the boundary surface based on a light reception signal obtained by the first light reception portion.

3. The recording apparatus according to claim 2,
wherein the optical recording medium has a position guide layer including a guide groove formed therein,
wherein the laser irradiation portion is structured to irradiate the first laser light and second laser light different from the first laser light onto the optical recording medium via a common objective lens and includes a biaxial mechanism that holds the objective lens such that the objective lens can be displaced in a focus direction and a tracking direction orthogonal to the focus direction,
the recording apparatus further comprising:
a tracking control portion that executes tracking control of the first laser light and the second laser light by controlling a position of the objective lens in the tracking direction by a drive of the biaxial mechanism; and
a second light reception portion that receives return light of the second laser light irradiated onto the optical recording medium, and
wherein the control portion controls the tracking control portion to execute tracking servo control of the first laser light and the second laser light on the guide groove based on a light reception signal obtained by the second light reception portion.

4. The recording apparatus according to claim 3, further comprising
a reproduction portion that reproduces information recorded by the hole marks based on the light reception signal obtained by the first light reception portion,
wherein, during reproduction, the control portion controls the focus control portion to execute the focus servo control of the first laser light on the boundary surface on which the hole marks are formed based on the light reception signal obtained by the first light reception portion and controls the tracking control portion to execute the tracking servo control of the first laser light on the hole marks based on the light reception signal obtained by the first light reception portion.

5. A recording method, comprising
irradiating first laser light onto an optical recording medium in which a plurality of resin layers are formed while the first laser light is focused on a boundary surface of the resin layers, to record hole marks onto the boundary surface.

6. An optical recording medium in which a plurality of resin layers are formed and, by being irradiated with first laser light while the first laser light is focused on a boundary surface of the resin layers, hole marks are recorded onto the boundary surface.

7. The optical recording medium according to claim 6,
wherein a plurality of boundary surfaces are formed, and
wherein a distance between the boundary surfaces is 10 µm or less.

8. The optical recording medium according to claim 7,
wherein 3 or more boundary surfaces are formed,
and
wherein intervals among the boundary surfaces differ.

9. The optical recording medium according to claim 8,
wherein the plurality of resin layers are obtained by laminating layers formed of different resin materials.

10. The optical recording medium according to claim 8,
wherein the plurality of resin layers are obtained by laminating layers formed of the same resin material.

11. The optical recording medium according to claim 8,
wherein the plurality of resin layers have the same refractive index.

12. The optical recording medium according to claim 8,
wherein the resin layers adjacent to each other have different refractive indexes.

13. The optical recording medium according to claim 8,
wherein a thickness of a bulk layer constituted of the plurality of resin layers is 300 µm or less.

14. The optical recording medium according to claim 8,
wherein the resin layers are each formed of any one of a light-curable resin, a light-polymerized resin, an optically-transparent resin, and a high-performance engineering plastic material.
